# EUROPEAN PATENT APPLICATION

(11) **EP 3 062 287 A1**
(43) Date of publication of application: **31.08.2016**
(21) Application number: 15159339.9
(22) Date of filing: 17.03.2015
(51) Int. Cl.: G06T 5/00

(54) **METHODS AND SYSTEMS FOR MANAGING MULTIPLE VERSIONS OF A PROCESS IN A PROCESSING CHAIN**

(30) Priority: 26.02.2015 US 201562121389 P
(71) Applicant: FEI COMPANY, Hillsboro, Oregon 97124-5793 (US)
(72) Inventor: Schoenmakers, Remco, 5685 HE Best (NL)
(74) Representative: Bakker, Hendrik

(57) **Abstract**

Methods and systems for management of processing step versions within a processing chain are disclosed. In one aspect, a method of processing data in a computing circuit includes displaying first and second version indicators corresponding to first and second versions of a first process on an electronic display, wherein the first and second versions of the first process are configured to receive the data as input, receiving input selecting the first or second version; and processing the data based on the selected version of the process.

## Description

### BACKGROUND

### Field

The described technology generally relates to methods and systems for managing multiple versions of a processing step in a processing chain.

### Description of the Related Technology

Backward chaining is a processing technique used in many industries, including materials science, electronics, geologic analysis, and industrial inspection to name a few. An analytical system that provides for backward chaining may allow a user to specify a particular desired result. The analytical system may then determine whether the particular result is available, and if not, how the result may be achieved. The analytical system may specify how to achieve the result based on processing blocks and data sets at its disposal.

During development of a processing chain that can achieve the desired result, a processing step used to generate the result may be modified and/or improved. After the processing step is modified, the processing chain may be re-executed to generate a new output result based on the modification. The user may then be presented with multiple versions of output data, each created by a different version of the processing step. The situation may be made even more complex when a particular processing chain includes multiple data processing steps, with multiple processing steps modified during development of the processing chain. Thus, there is a need to manage the complexity associated with incremental development of a data processing step within a data processing chain.

### SUMMARY

The systems, methods, and devices of the invention each have several aspects, no single one of which is solely responsible for its desirable attributes. Without limiting the scope of this invention as expressed by the claims which follow, some features will now be discussed briefly. After considering this discussion, and particularly after reading the section entitled "Detailed Description" one will understand how the features of this invention provide advantages that include improved methods and systems for managing multiple versions of a processing step in a processing chain.

Methods and systems disclosed herein provide for the definition of multiple versions of a processing step within a processing chain. When a processing chain is executed, a particular version of the processing step is executed, based on a previous selection, and contributes to the production of the output data of the processing chain. The system is thus aware of each version of each processing step used when a particular output is produced. This information can be recorded, and in some cases, associated with the output data, such that it is available for archival purposes. Later, if particular results of the processing chain need to be replicated, the archival data can be relied up to assist in making such reproduction easier than with current systems.

One aspect of this disclosure provides a method of displaying first and second version indicators corresponding to first and second versions of a first process, wherein the first and second versions of the first process are configured to receive the data as input, receiving input selecting the first or second version; and processing the data based on the selected version of the process. Some aspects of the method include receiving input defining one or more parameters of the first process, wherein the parameters apply to the first and second versions of the first process. In some aspects of the method the first and second versions of the first process are configured to generate at least one output of a common type. In some aspects of the method, a second process receives as input either a first output of the first version of the first process or a second output of the second version of the first process. In some aspects of the method, whether the second process receives the first output or the second output is based on which version of the first process is selected. Some aspects of the method further comprise generating output data based on processing the data using the selected version of the first process; and displaying an indicator corresponding to the output data. Some aspects of the method include receiving input selecting another version of the first process, processing the data using the other version based at least in part on the selection of the other version to generate second output data; and displaying a data indicator corresponding to the second output data. Some aspects of the method include displaying an indicator of the data. Some aspects of the method include tagging output of the processing with a value indicative of the selected version. Some aspects of the method include receiving input changing the selected version of the first process from a previously selected version to a currently selected version, first determining whether output data of the first process is based on the previously selected version or the currently selected version, second determining a color for an indicator of the output data based on the first determining; and displaying the indicator on the electronic display with the determined color. Some aspects of the method include displaying a user interface control configured to receive input selecting a version of the first process. Some aspects of the method include determining a number of displayed versions of the first process; and displaying a multiple version indicator in response to the number of versions being greater than one. In some aspects of the method the data defines an image file.

Another aspect disclosed is an apparatus for processing data in a computing circuit. The apparatus includes a processor, a memory, operably connected to the processor, and configured to store instructions that configure the processor, the instructions comprising: a display module, configured to display first and second version indicators corresponding to first and second versions of a first process, wherein the first and second versions of the first process are configured to receive the data as input; a selection module, configured to receive input selecting the first or second version; and a data processing module, configured to process the data based on the selected version of the process.

In some aspects of the apparatus, the selection module is further configured to receive input defining one or more parameters of the first process, wherein the parameters apply to the first and second versions of the first process. In some aspects of the apparatus, the first and second versions of the first process are configured to generate at least one output of a common type. In some aspects of the apparatus, the instructions stored in the memory configure the processor to store a second process that is configured to receive as input either a first output of the first version of the first process or a second output of the second version of the first process. In some of these aspects, whether the second process receives the first output or the second output is based on which version of the first process is selected.

In some aspects of the apparatus, the data processing module is further configured to generate output data based on processing the data using the selected version of the first process, and the display module is further configured to display an indicator corresponding to the output data. n some aspects of the apparatus, the selection module is further configured to receiving input selecting another version of the first process, the data processing module is further configured to process the data using the other version based at least in part on the selection of the other version to generate second output data, and the display module is further configured to display a data indicator corresponding to the second output data. In some aspects of the apparatus, the display module is further configured to display an indicator of the data. In some aspects of the apparatus, the processing module is configured to tag output of the processing with a value indicative of the selected version.

In some aspects of the apparatus, the selection module is configured to receive input changing the selected version of the first process from a previously selected version to a currently selected version, the display module is further configured to: first determine whether output data of the first process is based on the previously selected version or the currently selected version, second determine a color for an indicator of the output data based on the first determining, and display the indicator on the electronic display with the determined color. In some aspects of the apparatus, the display module is further configured to display a user interface control configured to receive input selecting a version of the first process. In some aspects of the apparatus, the display module is further configured to: determine number of displayed versions of the first process; and display a multiple version indicator in response to the number of versions being greater than one.

Another aspect disclosed is an apparatus for processing data in a computing circuit. The apparatus includes means for displaying first and second version indicators corresponding to first and second versions of a first process, wherein the first and second versions of the first process are configured to receive the data as input, means for receiving input selecting the first or second version; and means for processing the data based on the selected version of the process.

Some aspects of the apparatus also include means for receiving input defining one or more parameters of the first process, wherein the parameters apply to the first and second versions of the first process. In some aspects of the apparatus, the first and second versions of the first process are configured to generate at least one output of a common type.

In some aspects of the apparatus, a second process receives as input either a first output of the first version of the first process or a second output of the second version of the first process. In some aspects of the apparatus, whether the second process receives the first output or the second output is based on which version of the first process is selected. Some aspects of the apparatus also include means for generating output data based on processing the data using the selected version of the first process; and means for displaying an indicator corresponding to the output data. Some aspects of the apparatus also include means for receiving input selecting another version of the first process, means for processing the data using the other version based at least in part on the selection of the other version to generate second output data, and means for displaying a data indicator corresponding to the second output data.

Some aspects of the apparatus also include means for displaying an indicator of the data. Some aspects of the apparatus also include means for tagging output of the processing with a value indicative of the selected version. Some aspects of the apparatus also include means for receiving input changing the selected version of the first process from a previously selected version to a currently selected version, means for first determining whether output data of the first process is based on the previously selected version or the currently selected version, means for second determining a color for an indicator of the output data based on the first determining; and means for displaying the indicator on the electronic display with the determined color. Some aspects of the apparatus also include means for displaying a user interface control configured to receive input selecting a version of the first process. Some aspects of the apparatus also include means for determining a number of displayed versions of the first process; and means for displaying a multiple version indicator in response to the number of versions being greater than one. In some aspects of the apparatus, the data defines an image file.

Another aspect disclosed is a computer readable storage medium comprising instructions that when executed cause a processor to perform a method of processing data in a computing circuit. The method includes displaying first and second version indicators corresponding to first and second versions of a first process, wherein the first and second versions of the first process are configured to receive the data as input; receiving input selecting the first or second version; and processing the data based on the selected version of the process. In some aspects of the computer readable storage medium, the method also includes receiving input defining one or more parameters of the first process, wherein the parameters apply to the first and second versions of the first process.

In some aspects of the computer readable storage medium, the method also includes the first and second versions of the first process are configured to generate at least one output of a common type. In some aspects of the computer readable storage medium, the method also includes a second process receives as input either a first output of the first version of the first process or a second output of the second version of the first process. In some aspects of the computer readable storage medium, the method also includes whether the second process receives the first output or the second output is based on which version of the first process is selected. In some aspects of the computer readable storage medium, the method also includes generating output data based on processing the data using the selected version of the first process; and displaying an indicator corresponding to the output data.

In some aspects of the computer readable storage medium, the method also includes receiving input selecting another version of the first process, processing the data using the other version based at least in part on the selection of the other version to generate second output data, and displaying a data indicator corresponding to the second output data. In some aspects of the computer readable storage medium, the method also includes displaying an indicator of the data. In some aspects of the computer readable storage medium, the method also includes tagging output of the processing with a value indicative of the selected version.

In some aspects of the computer readable storage medium, the method also includes receiving input changing the selected version of the first process from a previously selected version to a currently selected version, first determining whether output data of the first process is based on the previously selected version or the currently selected version, second determining a color for an indicator of the output data based on the first determining, and displaying the indicator on the electronic display with the determined color. In some aspects of the computer readable storage medium, the method also includes displaying a user interface control configured to receive input selecting a version of the first process. In some aspects of the computer readable storage medium, the method also includes determining a number of displayed versions of the first process, and displaying a multiple version indicator in response to the number of versions being greater than one. In some aspects of the computer readable storage medium, the data defines an image file.

### BRIEF DESCRIPTION OF THE FIGURES

FIG. 1 illustrates a user interface screen of an analytical system that provides backward chaining capability.
FIG. 2A illustrates a second user interface screen of the analytical system of FIG. 1 that includes a recipe editor window and properties window.
FIG. 2B illustrates a third user interface screen of the analytical system of FIG. 1 that includes an execution view and a properties window.
FIG. 3 is a system block diagram of a system that may implement the disclosed embodiments.
FIG. 4 is a flowchart of one embodiment of a method for processing data.

### DETAILED DESCRIPTION

Embodiments of the invention relate to systems and methods for graphically displaying and allowing a user to modify steps of a processing chain. For example, the system may be configured to display a processing chain as a sequence of processing steps. Each processing step may be represented by a graphical indicia, such as a block, with each block shown with one or more lines connecting it in a chain. Each block may list a particular step, and then have associated graphical indicia of a process that runs within the system to carry out that step. Thus, at each position there may be one indicia of a block showing a step in the process, and one or more associated indicia representing the process that underlies how the step is performed. In order to update or modify the processing step, the user may add a new version, which would become associated with that step. The user could then re-execute the processing chain by selecting the newly added version of the processing step by selecting the indicia in a user interface and requesting an update. The system may then re-execute at least a portion of the processing chain or, for example, only the processing steps affected by the new version. A new result may then be reported that is based on the new version of the process. This graphical method of selecting and updating processing chains allows users to quickly and easily manipulate how their data was calculated, and also perform traceable updates to any process by updating particular methods in the process.

Various aspects of the novel systems, apparatuses, and methods are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the novel systems, apparatuses, and methods disclosed herein, whether implemented independently of, or combined with, any other aspect of the invention. For example, an apparatus may be implemented or a method may be practiced using any number of the aspects set forth herein. In addition, the scope of the invention is intended to cover such an apparatus or method which is practiced using other structure, functionality, or structure and functionality in addition to or other than the various aspects of the invention set forth herein. It should be understood that any aspect disclosed herein may be embodied by one or more elements of a claim.

Implementations disclosed herein provide methods and systems for managing multiple versions of a process in a processing chain. One skilled in the art will recognize that these embodiments may be implemented in hardware, software, firmware, or any combination thereof.

In the following description, specific details are given to provide a thorough understanding of the examples. However, it will be understood by one of ordinary skill in the art that the examples may be practiced without these specific details. For example, electrical components/devices may be shown in block diagrams in order not to obscure the examples in unnecessary detail. In other instances, such components, other structures and techniques may be shown in detail to further explain the examples.

It is also noted that the examples may be described as a process, which is depicted as a flowchart, a flow diagram, a finite state diagram, a structure diagram, or a block diagram. Although a flowchart may describe the operations as a sequential process, many of the operations can be performed in parallel, or concurrently, and the process can be repeated. In addition, the order of the operations may be re-arranged. A process is terminated when its operations are completed. A process may correspond to a method, a function, a procedure, a subroutine, a subprogram, etc. When a process corresponds to a software function, its termination corresponds to a return of the function to the calling function or the main function.

Those of skill in the art will understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

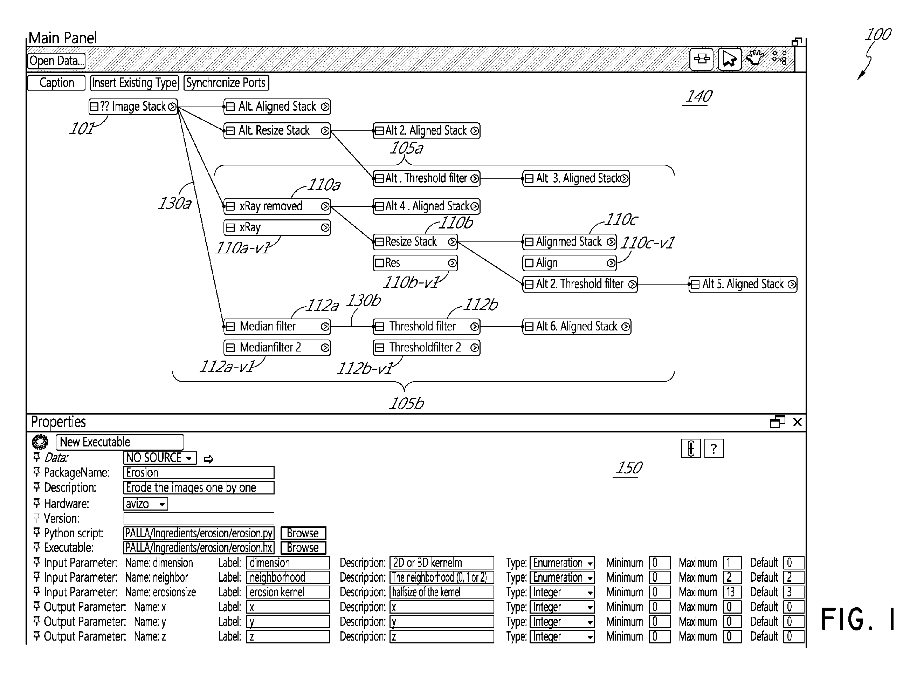

FIG. 1 illustrates a user interface screen 100 of an analytical system that provides backward chaining capability. The user interface screen 100 shows a portion of a user interface of a program called PALLAS, which stands for "Platform for ALL Analysis and Storage." The screen 100 shown in FIG. 1 is displayed by a recipe management system of PALLAS. A recipe is a collection of ingredients, or processing steps. FIG. 1 shows a recipe editor window 140 and a properties window 150. Some implementations of PALLAS allow a user to connect together ingredients with similar or matching input and output files together into a recipe. These recipes can be stored on a PALLAS server in a database.

Recipes can be viewed, changed, or created in PALLAS. The recipe editor window 140 shows processing steps of a processing chain that can be manipulated by the user. In some aspects, the properties window 150 displays the properties of a processing step or input/output data file in the recipe editor window 140 that is currently selected.

The recipe shown on screen 100 in the recipe editor window 140 includes graphical representations of two processing chains, 105a-b. Processing chain 105a includes three processing steps 110a-c. Processing chain 105b includes two processing steps 112a-b. In the illustrated aspect, each version of a processing step is displayed using a version indicator. For example, screen 100 shows each of the processing step indicators 110a-c and 112a-b have one corresponding version, shown with version indicators 110a-v1, 110b-v1, 110c-v1, 112a-v1, and 112b-v1. In some aspects, one or more of the processing steps corresponding to processing step indicators 110a-c and/or 112a-b may have multiple versions (not shown in FIG. 1).

Each processing chain 105a-b may accept one or more inputs. For example, each of processing chains 105a-b receives the output of a file reader or database accessing block 101 as input. The file reader 101 reads in an input file (e.g., a raw image file) and may convert it into a format ready for processing by the processing chains 105a-b.

In addition to receiving a source file via the file reader 101 (e.g., a raw or converted image file) as input, a processing chain may also receive one or more additional input parameters. At least one of these additional input parameters may be based on input from a user. In some aspects, these additional parameter values may effect how a processing step processes another input, such as the source file (e.g. the raw or converted image file). Examples of additional input parameters can include one or more of contrast information, hue information, image rotation angle, cropping information, and/or a second image file. Other parameters are also contemplated. In some aspects, parameters can be shared between all processing steps of the same recipe (e.g., global parameters). In some aspects, parameters can be shared between different versions of the same processing step (e.g., processing parameters). In some aspects, certain parameters may only apply to a specific version of a processing step (e.g., version specific parameters).

FIG. 1 shows connectors 130a-b indicating the flow of data from one indicator to another. For example, the connector 130a is shown between the file reader 101 and the processing step indicator 112a. The processing step indicator 112a is then connected to another processing step indicator 112b via another connector 130b. By viewing the displayed elements of the processing chains 105a-b in FIG. 1, the user is able to quickly and accurately understand how the image file from the file reader 101 is processed to produce various outputs.

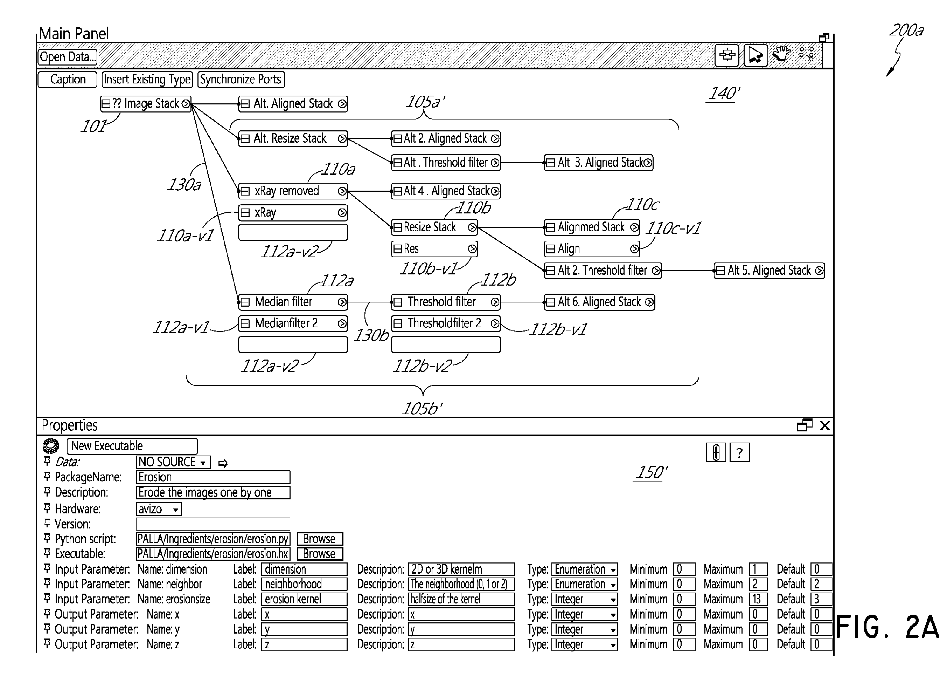

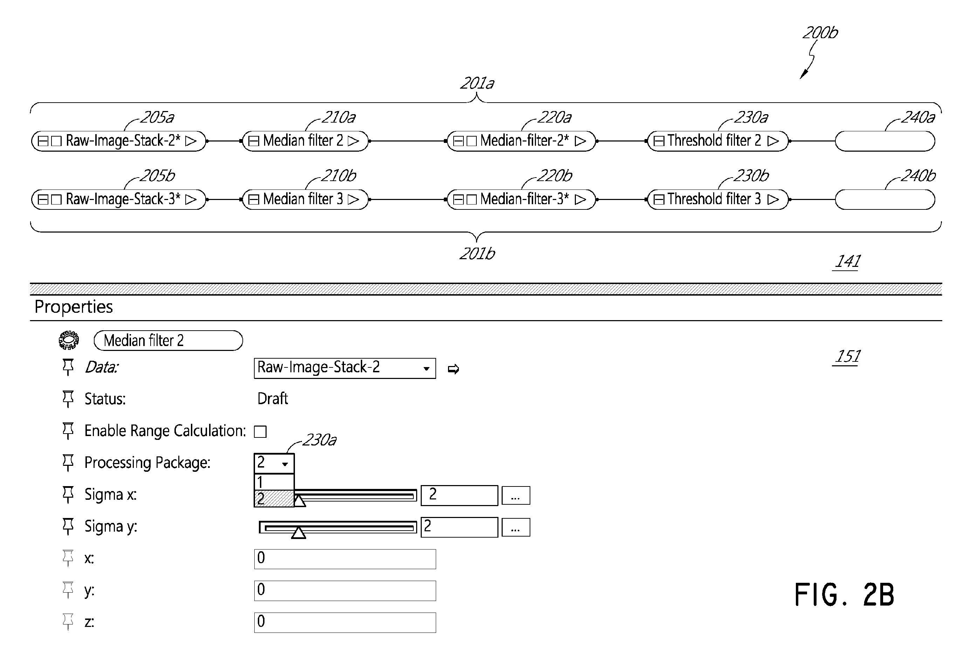

FIG. 2A shows a second user interface screen 200a of the analytical system of FIG. 1, including a recipe editor window 140' and properties window 150'. In some aspects, the recipe editor window 140' of FIG. 2 is produced by the same recipe editor that produced recipe editor window 140 of FIG. 1. Recipe editor window 140' includes processing chains 105a' and 105b', which represent modified versions of processing chains 105a and 105b from FIG. 1. In contrast to processing chains 105a-b of FIG. 1, recipe editor window 140' shows that each of the processing chains have been modified such that processing step corresponding to indicator 110a now includes two versions, 110a-v1 and 110a-v2. Processing chain 105b has been modified into processing chain 105b', with the processing step corresponding to indicator 112b including two versions, shown by version indicators 112b-v1 and 112b-v2. Although FIG. 2A illustrates two versions of processing steps 110a-c and 1120a-b, the number of versions any processing step may have is not limited thereto. For example, in some embodiments, a processing step may have three, four, five, six, seven, eight, nine, ten, or more versions. The number of versions can be unlimited in some implementations.

In some aspects, versions of a particular processing block, such as the processing blocks corresponding to indicators 110a-c and 112a-b shown in FIGs. 1-2A may share one or more attributes or parameters. For example, in some aspects of PALLAS, some parameters may be considered global, in that they are shared by all processing steps defined by the system. Some other parameters may be processing step specific. These parameters may not be shared with other processing steps, but are shared by all versions of a single processing step. In some aspects, an application program implementing the display 100 may provide an interface that allows a user to enter or update values for properties common to all versions of a process step, but not common to other processing blocks. Updating these properties may cause each version of the processing block to apply and/or utilize the updated parameter values. Some further aspects of PALLAS may provide for each version of a single processing step to define a parameter value specific to only that version.

The recipe editor shown in FIGs. 1 and 2A defines which parameters are used by each of the processing steps. Particular values of parameters for an execution of a processing chain may be defined in some aspects by the execution view 200b.

In some aspects, PALLAS may provide for one version of a processing step to use a first algorithm and a second version of a processing step to invoke a second, different algorithm. Versions of a processing step may share processing logic. For example, in some aspects, two or more versions of a processing step may share 50%, 60%, 70%, 80%, 90%, or 99% of the same logic. In some aspects, two or more versions of a processing step may share 100% of the same logic. In this scenario, the versions may differ in their output based on a recipe definition that passes different parameter values to each version of the processing step.[I am not sure I understand the '100%'scenario. If the logic is 100% the same, the version is indentical.]

In some aspects, versions of a processing block may share at least one common input and produce at least one common output or type of output. For example, as shown in FIG. 2A, versions 110a-v1 and 110a-v2 share the the file reader 101 as a common input. These versions also all share a common output, in that they all produce data corresponding to a similar output type. While versions 112a-v1 and 112a-v2 also share input 101 with versions 110a-v1 and 110a-v2, they are not versions of the same processing block. For example, versions 110a-v1 and 110a-v2, do not share a common output with versions 112a-v1 and 112a-v2. Similarly, versions 110a-v1 and 110a-v2 do not share common parameters that may be displayed in properties window 150 with versions 112a-v1 and 112a-v2. These different versions are also not displayed together in the recipe editor 140'.

In some aspects, one or more outputs of a first processing chain can be inputs to a second processing chain. For example, referring to FIG. 1, in some aspects not shown, the file reader 101 may be processed by both of the processing chains 105a-b. In some aspects, first output data produced by the first processing chain 105a may be used as input to the second processing chain 105b. Processing chain 105b may then produce second output data based on first output data.

In the particular implementation of PALLAS, each version of a processing block may at least reference a definition of a script that conforms to a standard input interface, allowing the script and its corresponding version of a processing step to receive parameters from the PALLAS system.

In some aspects, versions of a processing step may be grouped together visually on the recipe editor screen 140'. For example, in some aspects, a group box or similar indicator on a user interface screen may indicate that multiple processing step version indicators are versions of the same processing step. For example, some aspects may display a group box substantially enclosing processing step indicator 112a and version indicators 112a-v1 and 112a-v2, to visually associate processing step 112a with its respective versions 112a-v1 and 112a-v2. One or more of the above described features can be used together within the versions of a processing step.

FIG. 2B is a third user interface screen of the analytical system of FIG. 1, showing an execution view 200b including a process view 141 of the recipe shown in the recipe editor screen 140' of FIG. 2A. FIG. 2B also shows a properties window 151 for a selected portion of the recipe shown in the process view 141. While the recipe editors 140 and 140' of FIGs. 1 and 2A show processing steps in a processing chain, the process view 141 shows the respective data flows through the processing chain(s) during or after execution of the processing chains. Note that in some aspects, any of the processing chains and/or processing steps shown in FIGs. 1 and 2A may be shown in the execution view 200b.

In the process view 141, two processing chains 201a and 201b are shown. Data indicators 205a and 205b represent the source data (e.g., an image file) that is being processed. Although FIG. 2B shows separate data indicators 205a and 205b, in some aspects, data processed by the processing chains 201 a and 201 b may be from an identical source.

The process view 141 displays intermediate output indicators 220a and 220b of the processing chains 201a and 201b. The intermediate output indicators 220a-b corresponds to output generated by the preceding processing steps 210a-b respectively. The processing step 210a may correspond to the processing step 110a of FIG. 2A. The process view 141 also shows output indicator 220b, which corresponds to output generated by processing step 210b. Output indicators 240a and 240b correspond to outputs of the processing steps 230a and 230b, which processed the outputs 220a and 220b. The output indicators 240a and 240b may correspond to the final outputs of the processing chains 201 a and 201 b.

In some aspects, one of multiple versions of a processing step may be selected via the execution view 200b. In some aspects, the selection is performed by a user, for example, via a pointing device or touch screen input. In some aspects, when an indicator of a particular processing step including multiple versions is selected in the process view 141, the properties window 151 may provide for selection of a particular version of the selected processing step via dropdown menu 230a. For example, when the user clicks processing step indicator 210a, the properties window 151 may display properties of the processing step 210a. The user may then select which version of the selected processing step 210a should be activated or used by the processing chain via the dropdown 230a. If the user selects a processing step indicator that does not have multiple versions, the dropdown 230a may be grayed out or default to "1", indicating that only one version exists. In some embodiments, the dropdown menu 230a may not be shown at all when a selected processing step includes only a single version.

Alternatively, in some aspects (not shown), multiple versions of a processing step may be shown in the process view 141. The multiple versions may share a radio control that allows a user to select a particular version of the processing step. For example, if processing step 210a corresponds to processing step 110a of FIG. 2A, one of versions 110a-v1 or 110a-v2 of the processing step 110a may be selected via a radio control to the left side (or right side) of the processing step indicator 210a in the execution view. Other embodiments may use a different technique for selecting a version of a processing step. For example, in some aspects, clicking on a displayed version indicator in the process view 141 may select the corresponding version of the processing step. Other embodiments may provide for manual selection of a processing step version. For example, in some aspects, a user may literally type a version number of a particular processing step into a user interface control to select a particular version corresponding to the version number.

In some aspects, selecting a version of a processing step causes the selected version to be "active" and all other versions of the processing step to be "inactive." In other words, by selecting one version of a processing step, the selected version of the processing step may be used to perform the function(s) of the processing step the next time a processing chain including the processing step is executed or performed. The versions of the processing step that are not selected will not perform any function during the execution of the processing step. Alternatively, the unselected versions may operate, but their output may not be part of the output of the processing chain. In other words, selecting one version of a processing step excludes selection of all other versions of that processing step, at least for a particular instance of the processing step within a processing chain.

In some aspects, a processing step may have multiple instances within one or more processing chains. For example, in some aspects not shown, the processing step 210a may be utilized in both of the processing chains 201 a and 201 b. Since processing step 210a may correspond to processing step 110a of FIG. 2B, it may include two versions 110a-v1 and 110a-v2. In this scenario, there is a need to select which version of processing step 210a/110a is active in each of the processing chains 201 a and 201 b.

When a single processing step is used in multiple processing chains, or used repeatedly within a single processing chain, the execution view 200b will show separate instance indicators for the single processing step. Each instance indicator of the processing step can be selected in the process view 141, and different properties will be shown for each selected instance of the processing step in the properties window 151. This provides for different instances of a single processing step to utilize different versions if appropriate. For example, a first version of the processing step 210a/110a could be selected for use in processing chain 201 a and a second version of the processing step 210a/110a could be selected for processing step 220a in processing chain 201 b.

Note that the PALLAS system may define instance-specific parameters of a processing step. For example, all versions of a processing step may share processing-step specific parameters as described above. All instances of a processing step may also share the processing step specific parameters. However, each instance of a processing step may have at least one parameter that is specific to the instance and is not shared with other instances of the processing step.

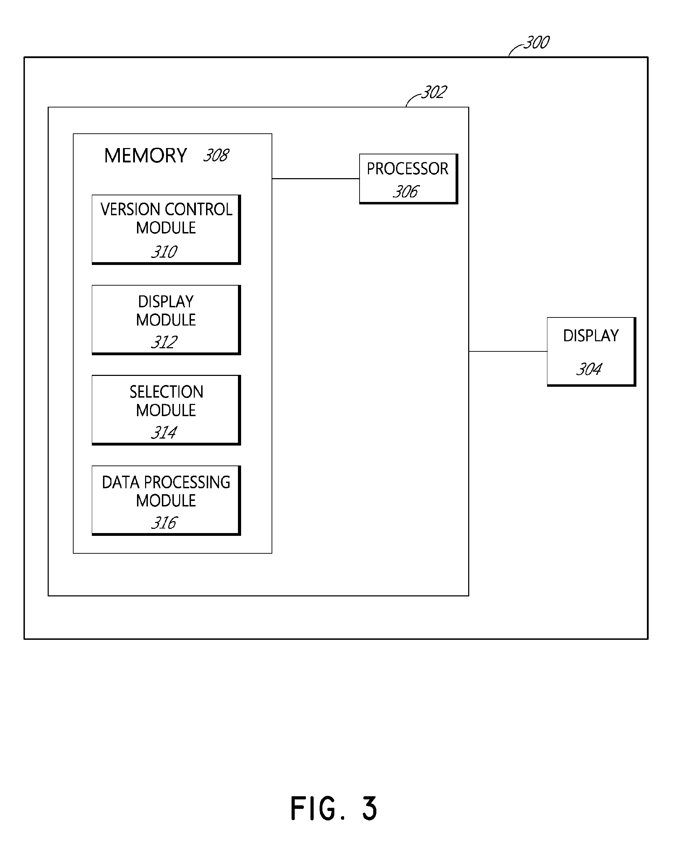

FIG. 3 is a block diagram of a system 300 that may implement the disclosed embodiments. The system 300 includes a computing circuit 302 and a display 304. The computing circuit 302 includes a processor 306 and a memory 308. The processor 306 may be a general purpose processing unit or a processor specially designed for imaging applications. The memory 308 stores instructions that configure the processor 306 to perform functions, such as performing various image processing and device management tasks. The instructions stored in the memory 308 are organized into modules. The modules include a version control module 310, a display module 312, a selection module 314 and a data processing module 316.

The version control module 310 includes instructions that may configure the processor 306 to perform version control and display information regarding versions of processing steps to the user. The version control module 310 may also coordinate and/or control the overall version control functions of the device 300. For example, the version control module 310 may include instructions that invoke instructions within the display module 312, selection module 314, and data processing module 316. The version control module 310 may store versions of processing blocks and relate processed data (or output data) with a version of a processing block that generated the output data. The version control module 310 may also store input data and relate the stored input data with stored output data generated based on the stored input data. For example, when the processor 306 receives information regarding a user's selection of the version, the processor may process the data using the selected version. The version control module 310 may also configure the processor 306 to store version(s) of processing steps used to generate output data with the output data. Therefore, processor 306 along with instructions within the version control module 310 represents at least one means for controlling versions of a process.

The display module 312 includes instructions that may configure the processor 306 to display various elements or graphical indicia on the display 304. For example, instructions in the display module 312 may configure the processor 306 to display screens 100 and/or 200a shown above with respect to FIGs. 1, 2A and 2B. Therefore, processor 306 along with display module 312 represents at least one means for displaying elements on the display 104.

The selection module 314 includes instructions that may configure the processor 306 to receive input selection from a user. For example, the input received by the selection module 314 may identify a version of a processing step that should be used in a processing chain, such as either version 112a-v1 or 112a-v2 within processing chain 105b', shown in FIG. 2A. Therefore, processor 306 and instructions within the selection module 314 represent at least one means for selecting a version of a processing step.

The data processing module 316 includes instructions that may configure the processor 306 to process input data using a selected version of a process. For example, if version 112a-v1 of processing step 112a in FIG. 2A is selected (via one of the above-disclosed version selection methods in the execution view of FIG. 2B), the data processing module 316 may execute processing chain 105b' using version 112-v1 of processing step 112a. Therefore, processor 306 along with data processing module 316 represents at least one means for processing data using a selected version of a data processing step.

In some embodiments, the computing circuit 302 can be in data communication with a user computer that has a display device. In other embodiments, the computing circuit and the user computer are enclosed within the same computer. For convenience of description, an embodiment where the computing circuit and the user computer are enclosed in the same device is described, but the disclosed aspects are not limited thereto. When the computing circuit and the user computer are enclosed in different computers, the computing circuit 302 transmits and receives data from the user computer using a suitable data communication protocol.

Additionally, although FIG. 3 illustrates one memory component having several modules, one with skill in the art would recognize several embodiments utilizing different memory architectures. For example, a design may utilize ROM or static RAM memory for the storage of processor instructions implementing the modules contained in memory 308. Alternatively, processor instructions may be read at system startup from a disk storage device that is integrated into device 300 or connected via an external device port. The processor instructions may then be loaded into RAM to facilitate execution by the processor 306. For example, memory 308 may be a RAM memory, with instructions loaded into working memory 308 before execution by the processor 306.

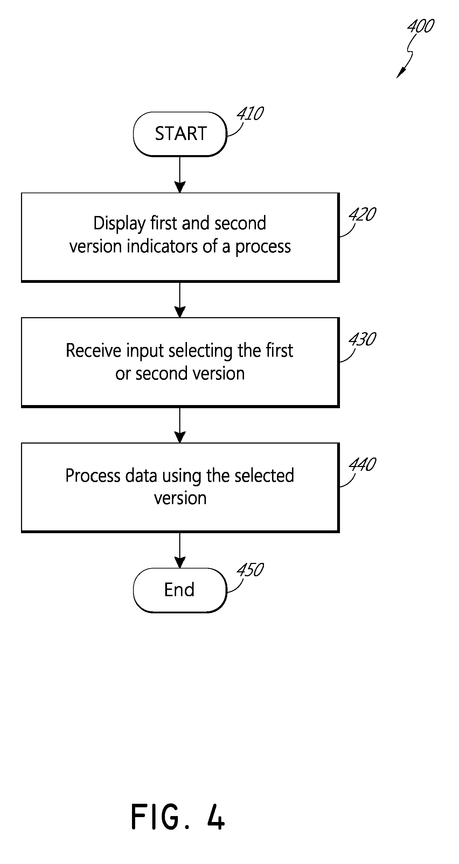

FIG. 4 is a flowchart of one embodiment of a method 400 for processing data. Portions or all of the method 400 of FIG. 4 may be implemented in one embodiment by instructions included in the computing circuit of FIG. 3, discussed above. The method may, in some aspects, display one or more of the user interfaces shown with respect to FIGs. 1-2B. The method 400 begins at a start block 410 and then transitions to block 420 where first and second version indicators of a process are displayed. For example, in some aspects, displaying the first and second version indicators may be equivalent to displaying two versions of a processing step as described above with respect to FIG. 2A. For example, the first version indicator may be processing block version 110a-v1 and the second version indicator may be processing block version 110a-v2. In some aspects of block 420, more than two version indicators may be displayed. For example, in some aspects, three, four, five, six, seven, eight, nine, or ten version indicators may be displayed. No limit on the number of versions of a processing step is contemplated, except perhaps by available system resources.

As discussed above with respect to FIG. 2A, versions of the processing step may share one or more processing step specific parameters. In addition, versions of the processing step share at least one input and at least one output type. As shown above in FIGs. 2A and 2B, versions 112a-v1 and 112a-v2 both receive the output of file reader 101 over connector 130a as input. Similarly, both versions 112a-v1 and 112a-v2 generate a common output type, outputs 220a and 220b.

In some aspects, block 420 may include displaying a processing step indicator, such as processing step indicators 110a or 110b. In some aspects, block 420 may further include displaying a connector from or to a processing step indicator. For example, as shown in FIG. 2A, connector 130a is displayed between file reader 101 and processing step indicator 112a. In some aspects, block 420 may include displaying an indicator of multiple versions with the processing step. For example, some aspects may implement a tree control with a processing step that includes multiple versions. The tree control may allow a user to expand and collapse a view of the processing step. When collapsed, a processing step indicator may be displayed, along with an indicator, such as a "+" sign or other indicator, indicating the processing step has multiple versions. In some aspects, selecting the indicator expands the tree control, while shows a list of version indicators, one for each version of the processing step. Selecting the indicator again may collapse the tree control.

In some aspects, block 420 may also include displaying one or more data indicator(s). In some aspects, a first data indicator may correspond to source data provided as input to the processing step. A second data indicator may correspond to output data generated by the processing step. In some aspects, a source data file corresponding to the first data indicator can define an image to be processed. In this example, the image to be processed may be an image of a molecular structure, a chemical compound, a chemical reaction, or an organism such as bacteria, but is not limited thereto.

In some aspects, one or more of the functions discussed above with respect to block 420 may be performed by the display module 312, discussed above with respect to FIG. 3.

After the at least first and second version indicators are displayed by block 420, process 400 moves to block 430, where input selecting the displayed versions (in this example, first and second versions) is received. As discussed above, every version of a processing step shares at least one common input and at least one common output type. For example, as shown in FIG. 2A, the first and second versions 112a-v1 and 112a-v2 receive the same input, i.e. an output of the file reader process 101. Also, the outputs of the first and second versions share at least one common output type. In some aspects, a common output type may be an image file.

As described above, in some aspects, selecting the first or second version may be performed by selecting a radio control that groups multiple version indicators. In some aspects, these multiple version indicators may be within the execution view as shown in FIG. 2B. In some aspects, selecting the first or second version may be performed by selecting from a drop down list. For example, as shown in FIG. 2B, a version may be selected in some aspects via dropdown control 230a. Other methods of selecting versions of a processing step are also contemplated. For example, selection of a version may be made via a configuration file. In some aspects, other user interface dialogs besides the examples shown may facilitate the selection of a version of a processing step. In some aspects, one or more of the functions discussed above with respect to block 430 may be performed by the selection module 314, discussed above with respect to FIG. 3.

Once a particular version has been selected, the process 400 transitions to block 440 where data is processed using or based on the selected version. In some aspects of process 400, once the selected version has completed processing of input data, an output data indicator may be displayed that corresponds to output data generated by the selected version of the process.

In some aspects, the output data indicator may be a selectable user interface control. In response to selection of the user interface control, some aspects of block 440 may display one or more attributes of the output data corresponding to the selected control. The one or more attributes displayed may include version identifiers for one or more processing steps used to generate the selected output data. For example, as shown in FIG. 2B, if output data 240a is selected, a version number for each of processing steps 210a and 230a used to generate the output data 240a may be displayed. The displayed version numbers may correspond to the versions of processing steps 210a and 230a selected at the time output data 240a was created.

In some embodiments, the process 400 may be performed more than once, using different versions of one or more processing steps. For example, a first iteration of the process 400 may be performed using a first selected version of a first processing step, and a second iteration may be performed using a different selected version (e.g., a second version) of the first processing step. In some aspects, separate output data is produced for each performance of process 400. Thus, for example, performing process 400 twice, using different versions of at least one processing step, may result in at least two sets of output data. In some aspects, the user is able to compare and contrast the at least two sets of output data generated based on the first version and the second version of the first processing step.

In some embodiments, a processing chain may include at least two distinct processing steps. For example, as shown in FIG. 2A, processing chain 105b' includes processing step 112a and processing step 112b. Each processing step 112a-b may have a selected version at the time of execution of the process in the execution view. In these embodiments, after input data is processed by a first processing step, for example, as described above, data derived from an output of the first processing step may be further processed by a selected version of a second processing step.

In some embodiments, output data may be stored with one or more indications of versions of processing steps used to generate the output data. In these aspects, when a user selects an output data indicator corresponding to the output data, at least one version of a processing step used to generate the output data may be displayed. This information may also be used in some aspects to recreate the output data. For example, versions of processing steps recorded with or associated with the output data may be used to recreate the output data in some aspects.

In some embodiments, a definition of processing logic within a processing step used to generate output data may be associated with or stored with the output data. This can be particularly useful for archival purposes. For example, by storing the output data with processing logic used to create the output data, reproduction of experimental results that created the output data may be facilitated. In some aspects, the processing logic may be stored in a "source" form, for example, via storage of source code such as python, C, C++, Java, C# source code. In other aspects, intermediate code, such as syntax elements, java byte codes, etc, may be stored with the output data.

In some aspects, functions associated with storing output data and associating copies of processing logic with output data may be performed by instructions included in the version control module 310, discussed above with respect to FIG. 3.

Some aspects of method 400 display indications of whether output data generated based on a processing chain is consistent with currently selected versions of one or more processing steps within the processing chain. For example, in some aspects, process 400 includes generating first output data based on one or more processing steps within a processing chain, each processing step having a corresponding selected version. A selected version of at least one of the processing steps may then be changed after the first output data is generated. Because the first output data is no longer consistent with the selected versions of the processing steps used to create it, some aspects of process 400 may indicate the inconsistency on the display. For example, in some aspects, a color of an output data indicator associated with the inconsistent output data may be changed from a first color associated with output data consistent with its corresponding processing chain, to a second color associated with output data inconsistent with its corresponding processing chain.

In some aspects, method 400 may track multiple versions of output data generated by a processing chain. The multiple versions of the output data may each be associated with versions of one or more processing steps used to generate the version of the output data. In these aspects, when a selected version of a processing step is changed, a database may be searched for a version of the output data consistent with currently selected versions of processing steps in the processing chain. If such a version is identified, an output data indicator may be displayed in a color indicating that the output data already exists. If no such version is identified, the output data indicator is displayed in a different color, indicating the output data does not exist. In some aspects, a color indicating that output data exists can be green, and a color indicating that the output data does not exist can be pink or brown, but embodiments are not limited thereto. If the output data consistent with currently selected versions of the processing steps does not exist, a user can choose to run the processing chain again using the currently selected versions. Upon completion of the processing chain's processing, a new version of the output data may be generated. A corresponding output data indicator may be displayed in a color indicating the output data is consistent with currently selected versions of processing steps within the processing chain.

In some aspects, one or more of the functions discussed above with respect to block 440 may be performed by the data processing module 316, discussed above with respect to FIG. 3. Once block 440 has been completed, the process 400 moves to end block 450.

Those having skill in the art will further appreciate that the various illustrative logical blocks, modules, circuits, and process steps described in connection with the implementations disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. One skilled in the art will recognize that a portion, or a part, may comprise something less than, or equal to, a whole. For example, a portion of a collection of pixels may refer to a sub-collection of those pixels.

The various illustrative logical blocks, modules, and circuits described in connection with the implementations disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or process described in connection with the implementations disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of non- transitory storage medium known in the art. An exemplary computer-readable storage medium is coupled to the processor such the processor can read information from, and write information to, the computer-readable storage medium. In the alternative, the storage medium may be integral to the processor. The processor and the storage medium may reside in an ASIC. The ASIC may reside in a user terminal, camera, or other device. In the alternative, the processor and the storage medium may reside as discrete components in a user terminal, camera, or other device.

Headings are included herein for reference and to aid in locating various sections. These headings are not intended to limit the scope of the concepts described with respect thereto. Such concepts may have applicability throughout the entire specification.

The previous description of the disclosed implementations is provided to enable any person skilled in the art to make or use the present invention. Various modifications to these implementations will be readily apparent to those skilled in the art, and the generic principles defined herein may be applied to other implementations without departing from the invention. Thus, the present invention is not intended to be limited to the implementations shown herein but is to be accorded the widest scope consistent with the principles and novel features disclosed herein.

## Claims

1. A method of processing data in a computing circuit, the method comprising:
displaying first and second version indicators corresponding to first and second versions of a first process on an electronic display, wherein the first and second versions of the first process are configured to receive the data as input;
receiving input selecting the first or second version; and
processing the data based on the selected version of the process.

2. The method of claim 1, wherein a second process receives as input either a first output of the first version of the first process or a second output of the second version of the first process, wherein whether the second process receives the first output or the second output is based on which version of the first process is selected.

3. The method of claim 1, further comprising:
generating output data based on processing the data using the selected version of the first process; and
displaying an indicator corresponding to the output data.

4. The method of claim 3, further comprising:
receiving input selecting the other version of the first process;
processing the data using the other version based at least in part on the selection of the other version to generate second output data; and
displaying a data indicator corresponding to the second output data.

5. The method of claim 1, further comprising:
receiving input changing the selected version of the first process from a previously selected version to a currently selected version;
first determining whether output data of the first process is based on the previously selected version or the currently selected version;
second determining a color for an indicator of the output data based on the first determining; and
displaying the indicator with the determined color.

6. An apparatus for processing data in a computing circuit, comprising:
a processor;
a memory, operably connected to the processor, and configured to store instructions that configure the processor, the instructions comprising:
a display module, configured to display first and second version indicators corresponding to first and second versions of a first process on an electronic display, wherein the first and second versions of the first process are configured to receive the data as input;
a selection module, configured to receive input selecting the first or second version; and
a data processing module, configured to process the data based on the selected version of the first process.

7. The apparatus of claim 6, wherein the selection module is further configured to receive input defining one or more parameters of the first process, and wherein the parameters apply to all versions of the first process.

8. The apparatus of claim 6, wherein the first and second versions of the first process are configured to generate at least one output of a common type.

9. The apparatus of claim 6, wherein the instructions stored in the memory configure the processor to store a second process, the second process configured to receive as input either a first output of the first version of the first process or a second output of the second version of the first process, wherein whether the second process receives the first output or the second output is based on which version of the first process is selected.

10. The apparatus of claim 6, wherein
the data processing module is further configured to generate output data based on processing the data using the selected version of the first process, and
the display module is further configured to display an indicator corresponding to the output data.

11. The apparatus of claim 6, wherein
the selection module is further configured to receiving input selecting another version of the first process,
the data processing module is further configured to process the data using the other version based at least in part on the selection of the other version to generate second output data, and
the display module is further configured to display a data indicator corresponding to the second output data.

12. The apparatus of claim 6, wherein the processing module is configured to tag output of the processing with a value indicative of the selected version.

13. The apparatus of claim 6, wherein:
the selection module is configured to receive input changing the selected version of the first process from a previously selected version to a currently selected version,
the display module is further configured to:
first determine whether output data of the first process is based on the previously selected version or the currently selected version,
second determine a color for an indicator of the output data based on the first determining, and
display the indicator on the electronic display with the determined color.

14. The apparatus of claim 6, wherein the display module is further configured to display a radio user interface control configured to receive input selecting a version of the first process.

15. The apparatus of claim 6, wherein the display module is further configured to:
determine a number of versions of the first process; and
display a multiple version indicator in response to the number of versions being greater than one.
